# EUROPEAN PATENT SPECIFICATION

(11) **EP 3 204 805 B1**
(45) Date of publication and mention of the grant of the patent: **29.08.2018**
(21) Application number: 14781917.1
(22) Date of filing: 10.10.2014
(51) Int. Cl.: G02B 6/44

(54) **DEVICE AND ASSEMBLY FOR RETAINING PASSIVE OPTICAL MODULES**
VORRICHTUNG UND ANORDNUNG ZUR BEFESTIGUNG PASSIVER OPTISCHER MODULE
DISPOSITIF ET ENSEMBLE DE RETENUE DE MODULES OPTIQUES PASSIFS

(43) Date of publication of application: 16.08.2017
(73) Proprietor: Prysmian S.p.A., 20126 Milano (IT)
(72) Inventor: ABBIATI, Fabio, I-20126 Milano (IT); LE DISSEZ, Arnaud, F-20126 Milano (FR)
(74) Representative: Perani & Partners S.p.A.
(86) International application number: PCT/EP2014/071783
(87) International publication number: WO 2016/055124

(56) References cited:
- US-A1- 2003 123 834
- US-A1- 2013 108 225
- US-B1- 6 507 691

## Description

### Field of the invention

The present invention relates to the field of equipments and components for the installation of optical cables in optical (access) networks. In particular, the present invention relates to a device for retaining passive optical modules and a passive optical module assembly.

### Background of the invention

A FTTH ("Fiber To The Home") network is an optical access network providing a number of end users with broadband communication services, i.e. with services requiring data transmission at a very high rate, for example of some Mbit/s.

Typically, a FTTH network comprises a distribution box or cabinet which cooperates with an access network and which is typically located in the basement of the building where the end users reside. During installation of the optical termination box, the operator has to lay down a drop cable from a distribution cabinet to the apartment of the end user where the operator has to cut the drop cable and connect the optical fibres to optical connectors by means of optical passive optical modules.

Devices are used for retaining a plurality of optical passive optical modules. Generally, these devices comprise a number of adjacent ribs extending upwardly from a base plate with spaces formed therebetween for the passive optical modules to be inserted. The space between the ribs is determined by the thickness of the passive optical module so that a fit is achieved when the passive optical module is inserted between adjacent ribs

US 2002/181922 discloses an optical splitter tray system comprising a tray framework receiving a plurality of fibre optic adapters operatively attached to respectively fibre optic cables and an accessory area where twelve optical splitters are transversely positioned. The splitters are arranged side by side with a wall/teeth between each splitter.

WO 2012/110450 discloses a fibre tray with an area for retaining and fixing optical splices of optical fibres. The tray further comprises fixing means arranged in pairs at opposite sides of the tray to retain a passive optical module in an inclined position. Some of the fixing means are configured as flexible arms, some of the fixing means are embodied as snap fits and some of the fixing means are embodied as faces.

US 2013/108225 A1 describes a device for retaining passive optical modules having a base surface, a first retaining member and a second retaining member arranged on the base surface for each passive optical module. The device also includes a receiving area defined between the first retaining member and the second retaining member for receiving a plurality of passive optical modules. The first retaining member is spaced apart from the second retaining member along a longitudinal direction, while the receiving area is configured to receive two passive optical modules arranged mutually adjacent along a direction transverse to the longitudinal direction. The first retaining member is configured to cooperate with the second retaining member to retain a plurality of passive optical modules arranged therebetween along the longitudinal direction. Similar devices are also disclosed in documents US 2003/123834 A1 and US 6507691 B1.

### Summary of the invention

Usually passive optical modules have a thickness of 4 mm. Use of plastic ribs of 1 mm of thickness between each passive optical module causes a waste of 25% of the overall space only for the retaining members.

The Applicant has perceived that the solutions proposed in US 2002/181922 and WO 2012/110450 are space consuming in case of a plurality of passive optical modules and furthermore they guarantee only a transversal retaining action.

In view of the above, the Applicant has tackled the problem of providing a device for retaining passive optical modules saving room in the area of the tray intended to receive multiple passive optical modules.

The Applicant has found that retaining members acting on the end portions of passive optical modules, so that the side walls of adjacent passive optical modules can become possibly even enter into contact, are suitable to provide a significant room saving in the optical modules housing area.

The present invention relates to a device for retaining passive optical modules according to claim 1. Preferably, the first retaining member is configured to act on a side edge of an upper surface of an end portion of the at least one passive optical module.

Preferably, the first retaining member is configured to act on a corner of an upper surface of an end portion of the at least one passive optical module.

Preferably, the first retaining member is configured to act on two adjacent passive optical modules to retain the two adjacent passive optical modules.

Preferably, the first retaining member is configured to act on side edges of the respective upper surfaces of two adjacent passive optical modules to retain the two adjacent passive optical modules such that the central portions of the upper surfaces are disengaged from the each first retaining member.

Preferably, the second retaining member comprises a plurality of second retaining members, the second retaining members are arranged mutually adjacent along a direction transverse to the longitudinal direction, the first retaining member is spaced apart from an opposite second retaining member along the longitudinal direction, the first retaining member is configured to cooperate with the opposite second retaining member to retain at least one respective passive optical module arranged therebetween along the longitudinal direction, the second retaining member is configured to act on at least one passive optical module on an upper surface of an end portion of the at least one passive optical module and on a front surface of the at least one passive optical module.

Preferably, the device comprises a plurality of first retaining members spaced apart along a direction, and a plurality of second retaining members spaced apart along the second direction such that a free room is defined between two adjacent first and second retaining members.

Preferably, the first retaining members and second retaining members are arranged respectively at a first portion and a second portion of the base surface, each retaining member of the first retaining members and second retaining members is configured to act on two adjacent passive optical modules to retain the two adjacent passive optical modules so that each passive optical module of the two adjacent passive optical modules is retained by two adjacent retaining members of the first retaining members and second retaining members, respectively at the first portion and the second portion of the base surface.

Preferably, each retaining member comprises an elastic portion configured to act on an upper surface of an end portion of the at least one passive optical module.

Preferably, the elastic portion is configured to elastically deform along the longitudinal direction upon insertion of a passive optical module in the receiving area along an insertion direction transversal to the base surface.

Preferably, the elastic portion is configured to snap over the passive optical module when the passive optical module is received in the receiving area.

Preferably, the retaining member comprises an abutment portion and a retaining portion, the abutment portion defines an abutment surface configured to act on a front surface of the at least one passive optical module, facing the abutment surface, to restrain the at least one passive optical module along the longitudinally direction, the retaining portion defines a retaining surface configured to act on an upper surface of an end portion of the at least one passive optical module, opposite to the base surface, to retain the at least one passive optical module along a direction transverse to the base surface.

Preferably, the abutment portion comprises an arm projecting from the base surface, the retaining portion comprises a tooth projecting from the arm towards the tooth of the retaining portion of the opposite retaining member.

Preferably, the base surface is configured to be attached removably to a passive optical module tray of a termination box. According to an embodiment, the invention relates to a tray according to claim 13. According to another embodiment, the invention relates to an assembly according to claim 14. Each passive optical module comprises a body extending along the longitudinal direction from two opposite end portions, each end portion of the body having a respective front surface and an upper surface, the first retaining member acts on the at least one passive optical module at a respective end portion on the front surface and on the upper surface.

Preferably, each upper surface comprises two opposite side edges, the first retaining member acts on the at least one passive optical module on a respective side edge.

Preferably, the plurality of passive optical modules comprises a first passive optical module and a second passive optical module arranged adjacent to the first passive optical module, the upper surface of each passive optical module comprises two opposite side edges so that the first and second passive optical modules have adjacent side edges, the first retaining member acts on a side edge of the first passive optical module and on an adjacent side edge of the second passive optical module to retain the first and second passive optical modules.

Preferably, the body has a lateral surface extending longitudinally between the opposite front surfaces, the front surfaces face the first retaining member and the second retaining member, the lateral surface of a passive optical module comprises two opposite side portions facing a respective side portion of the lateral surface of an adjacent passive optical module.

Preferably, the first retaining member and the second retaining member are disengaged from the facing side portions of adjacent passive optical modules.

Preferably, the second retaining member comprises a plurality of second retaining members, the second retaining members are arranged mutually adjacent along a second direction transverse to the longitudinal direction, the first retaining member is spaced apart from an opposite second retaining member along the longitudinal direction, each first retaining member is configured to cooperate with the opposite second retaining member to retain at least one respective passive optical module arranged therebetween along the longitudinal direction, the second retaining member is configured to act on at least one passive optical module on an upper surface of an end portion of the at least one passive optical module and on a front surface of the at least one passive optical module.

### Brief description of the drawings

The present invention will now be described in more detail hereinafter with reference to the accompanying drawings, in which some embodiments of the invention are shown.
FIG. 1 is a schematic perspective view of a device for retaining passive optical modules according to an embodiment of the invention with a passive optical module in an insertion position,
FIG. 2 is a schematic perspective view of the device for retaining passive optical modules of

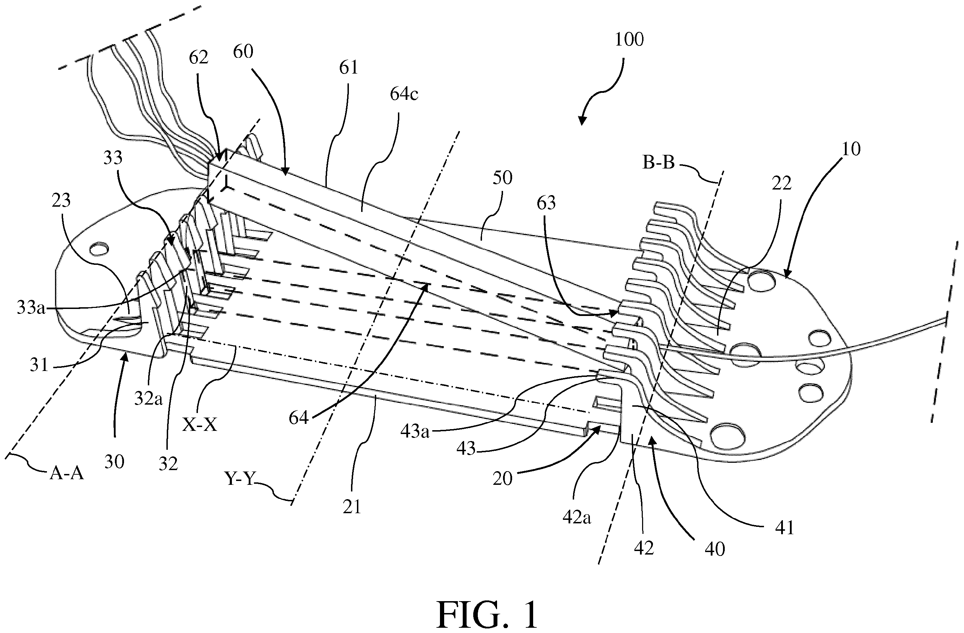

FIG. 1 with a retained passive optical module,

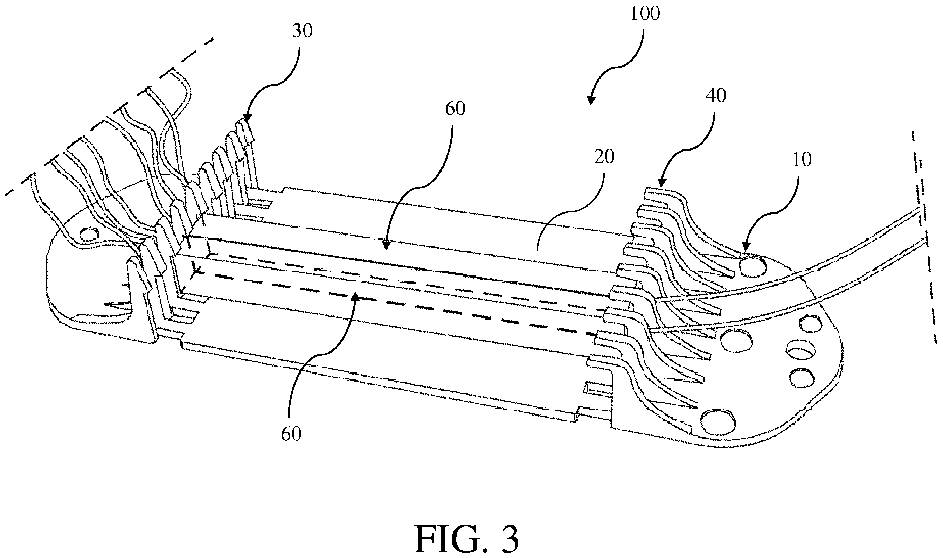

FIG. 3 is a schematic perspective view of the device for retaining passive optical modules of

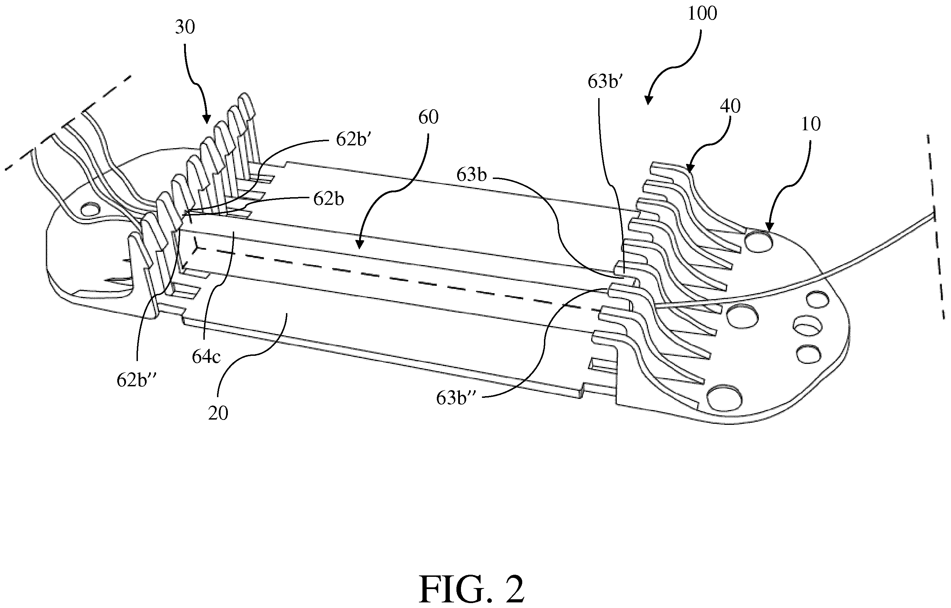

FIG 1 with a further passive optical module positioned adjacent to the passive optical module of FIG. 2,

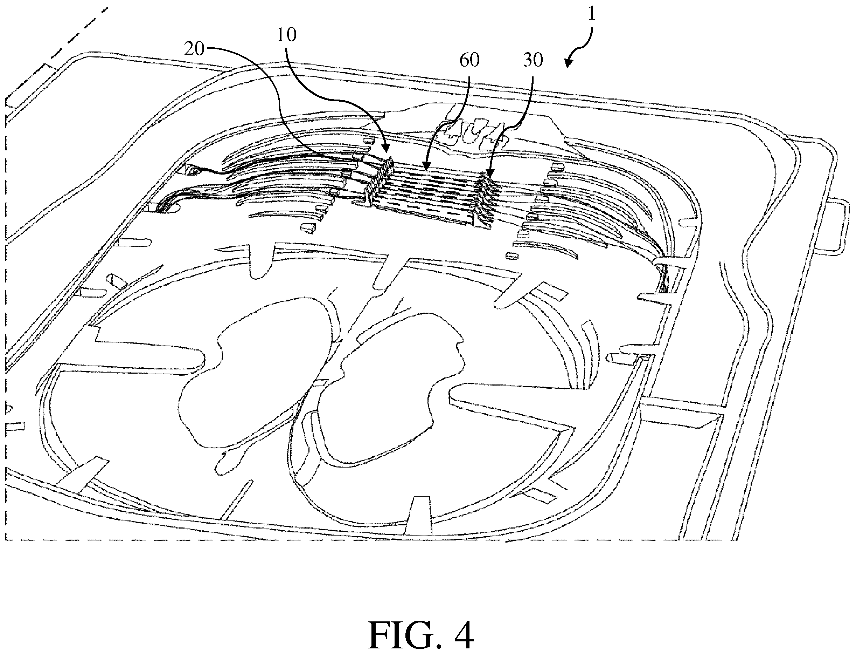

FIG. 4 is a schematic perspective view of a tray with the device for retaining passive optical modules of FIG. 1,

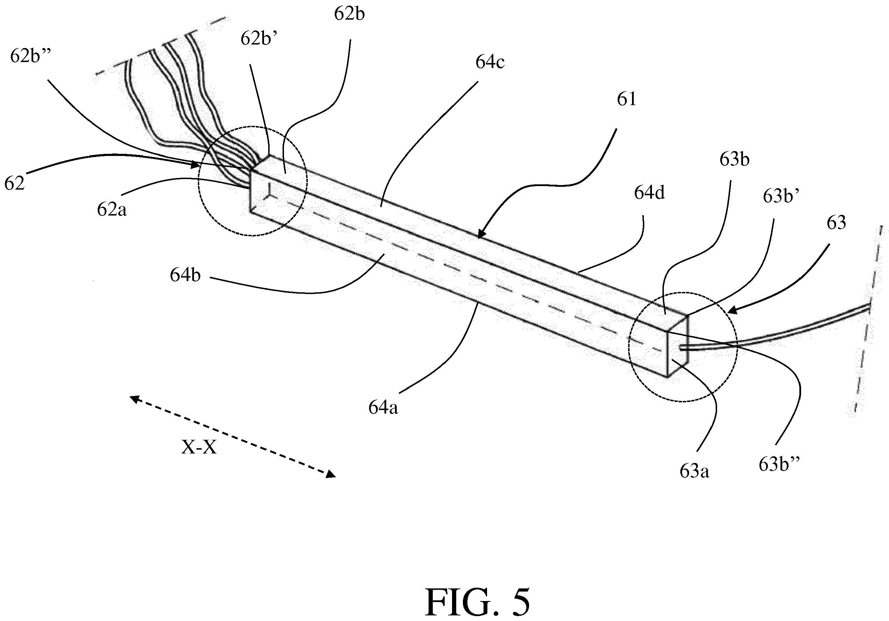

FIG. 5 is a schematic perspective view of the optical module of FIG. 1,

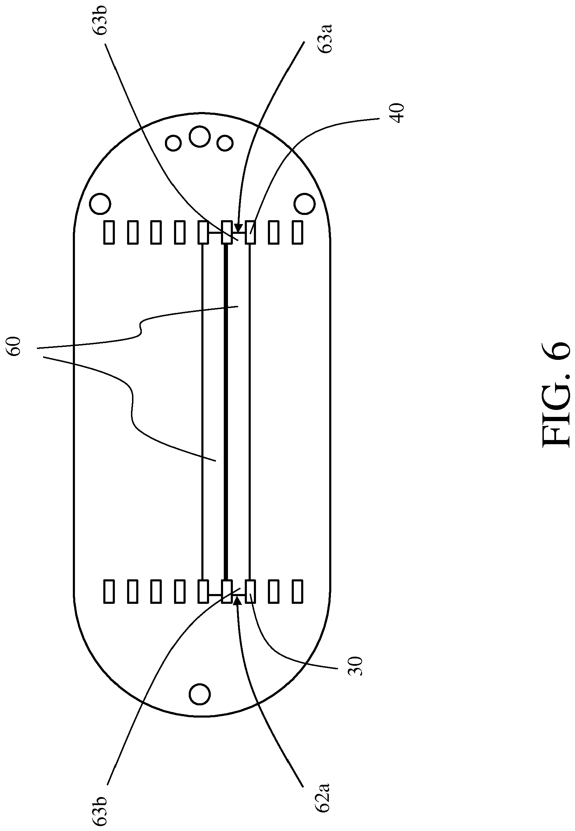

FIG. 6 is a schematic upper view of the optical module of FIG. 1 with two adjacent passive optical modules.

### Detailed description

For the purposes of the present description and claims, an optical cable is deemed to be any optical cable comprising one or more optical fibres, an outer sheath and, optionally, flexible strength members.

An optical fiber typically comprises an optical waveguide, constituted by an optically transmissive core, surrounded by a cladding. The optical waveguide is preferably covered by at least one protective coating layer ("coating"). Typically two protective coating layers are present: the first coating layer ("primary coating") is in direct contact with the optical waveguide, while the second coating layer ("secondary coating") covers the primary coating. In addition, a buffer layer may cover each optical fiber, the buffer layer may be substantially in contact with the secondary coating ("tight buffer") or it may consist of a small tube of inner diameter somehow larger than the outer diameter of the secondary coating ("loose buffer").

For the purposes of the present description and claims, a passive optical module indicates a fibre splice, an optical splitter or the like. When used as splitter, the passive optical module receives one optical fibre at one end portion and two or more optical fibres at the opposite end portion. When used as splice, the passive optical module receives one optical fibre at one end portion and one optical fibre at the opposite end portion. Passive optical modules can also receive optical fibres from the same end portion.

With reference to figure 4, a tray is indicated as a whole by numeral 1.

The tray 1 comprises a device 10 for retaining passive optical modules 60. The assembly of the device 10 with the plurality of passive optical modules 60 is indicated with 100.

The device 10 comprises a base surface 20, a first retaining member 30 and a second retaining member 40. Preferably, for each passive optical module, a pair of first retaining members 30 and at least one second retaining member 40 are provided, as hereinafter described.

The base surface 20 defines a surface which can be attached removably to the passive optical module tray 1. Alternatively, the base surface 20 may be the surface of the passive optical module tray 1.

The first retaining members 30 and the second retaining members 40 are arranged on the base surface 20. In particular, the first retaining members 30 and the second retaining members 40 are arranged respectively at a first portion 23 of the base surface 20 and at a second portion 22 of said base surface 20.

The first retaining members 30 and the second retaining members 40 are made in one piece with the base surface 20. According to a different embodiment, the first retaining members 30 and the second retaining members 40 may be fastened to the base surface 20 through fastening means, in a removable or non-removable manner.

The first retaining members 30 extend from the base surface 20 at the first portion 23 of the base surface 20. Preferably, the first retaining members 30 extend perpendicularly from the base surface 20.

The second retaining members 40 extend from the base surface 20 at the second portion 22 of the base surface 20. Preferably, the second retaining members 40 extend perpendicularly from the base surface 20.

The first retaining members 30 are arranged mutually adjacent along a first direction A-A. The second retaining members 40 are arranged mutually adjacent along a second direction B-B.

Preferably, the first retaining members 30 are spaced apart between them along the first direction A-A in order to create a passage for the optical fibers exiting from the optical module 60 at one end. According to one embodiment, even the second retaining members 40 can also be spaced apart between them along the second direction B-B in order to create a passage for the optical fibers exiting from the optical module 60 at one opposite end.

Each first retaining member 30 is spaced apart from an opposite second retaining member 40 along a longitudinal direction X-X. The longitudinal direction X-X is transverse to the first and the second directions A-A and B-B. Preferably, the first transverse direction A-A is parallel to the second direction B-B and the longitudinal direction X-X is perpendicular to the first and second directions A-A and B-B.

A receiving area 50 is defined on the base surface 20 between the first retaining members 30 and the second retaining members 40 for receiving one or more passive optical modules 60.

Typically, the passive optical modules 60 have a length measured along the longitudinal direction of 40mm, 60 mm or 80mm, a width measured along the directions A-A and B-B of 4 mm or 8 mm and a height measured along the direction perpendicular to the base surface 20 of 4 mm, 7 mm, 12 mm or 20 mm.

With reference to the example shown in the figure 5, each passive optical module 60 comprises a body 61 extending along the longitudinal direction X-X from two opposite end portions 62, 63, each end portion 62, 63 defining a respective front surface 62a,63a and an upper surface 62b, 63b.

The body 61 has a lateral surface 64 formed, preferably, by four walls 64a,64b,64c,64d. The lateral surface 64 extends longitudinally between the two opposite front walls which define the front surfaces 62a,63a. Each upper surface 62b, 63b comprises two opposite side edges 62b',62b" and 63b', 63b".

In the particular example shown in figure 4, the passive optical modules 60 can be arranged mutually adjacent in the receiving area 50 along a direction Y-Y transversal to the longitudinal direction X-X, in the example along a direction perpendicular to the longitudinal direction X-X.

When a passive optical module 60 is received on the receiving area 50 between a first retaining member 30 and an opposite second retaining member 40, the front surfaces 62a,63a face at least one respective first retaining member 30 and at least one respective second retaining member 40, the lateral wall 64a lies on the base surface 20 and the lateral wall 64c, opposite to the base surface 20, defines the upper surface of the passive optical module 60.

When two or more fibre modules 60 are arranged adjacent in the receiving area 50, the lateral walls 64b,64d of the passive optical module 60 face the lateral walls of one or more adjacent passive optical modules 60.

Advantageously, a pair of first retaining members 30 is configured to cooperate with the opposite second retaining member 40 to retain at least one respective passive optical module 60 arranged therebetween along the longitudinal direction X-X. With this arrangement, the opposite retaining members 30, 40 act on longitudinally opposite end portions of a passive optical module arranged longitudinally between them so that the side walls of each passive optical module is free to enter into contact with the facing adjacent side walls of an adjacent passive optical module.

As shown in the example of figure 6, each first retaining member 30 is configured to cooperate with the opposite second retaining member 40 to retain two adjacent passive optical modules 60 arranged therebetween along the longitudinal direction X-X.

Preferably, each retaining member 30, 40 is configured to act on two adjacent passive optical modules on their upper surface 62b, 63b of the end portion 62a, 63a of the passive optical modules 60, and on the front surface 62a, 63a of the passive optical modules 60, facing the opposite retaining member. This arrangement allows the passive optical modules to be arranged adjacent one another without the interposition of the retaining members so as to recover the room that, in the devices of the prior art, was used to arrange the retaining members.

More preferably, each retaining member 30, 40 is configured to act on two adjacent passive optical modules only on the upper surface 62b, 63b and only on the front surface 62a, 63a of the passive optical modules 60, facing the opposite retaining member.

Preferably, each retaining member 30, 40 is configured to act on two adjacent passive optical modules 60 on a respective side edge 62b', 63b' of the upper surface 62b, 63b of the end portion 62, 63.

When adjacent passive optical modules 60 are arranged adjacent one another, each retaining member 30, 40 is configured to act on a respective side edge of a first passive optical module 60 (such as the side edge 62b', 63b') and on an adjacent side edge of a second adjacent passive optical module 60 (such as the side edge 62b", 63b"), in order to retain, at the same time, the first and the second passive optical modules 60.

Preferably, each retaining member 30, 40 is configured to act on two adjacent passive optical modules 60. Thereby, each passive optical module 60 is retained by two adjacent retaining members 30, 40, respectively at the first portion 23 and at the second portion 22 of the base surface 20. Thanks to this feature, the overall number of retaining members 30,40 is kept as low as possible while maintaining a reliable retaining action on the passive optical modules 60.

According to one embodiment, one of the first and second retaining members 30, 40, in the example the first retaining members 30, comprises an elastic portion 31 configured to act on the upper surface 62b, 63b of the end portion 62, 63 of the corresponding passive optical module 60. This elastic portion makes the insertion and the removal of the passive optical module 60 easier and improves the retaining action of the retaining member 30 on the passive optical module 60.

Preferably, the elastic portion 31 is configured to elastically deform along the longitudinal direction X-X upon insertion of a passive optical module 60 in the receiving area 50 along an insertion direction transversal to the base surface 20, in the figures indicated with C.

In particular, the elastic portion 30 is configured to snap over the passive optical module 60 when the passive optical module 60 is received in said receiving area 50.

In the embodiment shown in the figures, each retaining member 30, 40 comprises an abutment portion 32, 42 and a retaining portion 33, 43.

The abutment portion 32, 42 defines an abutment surface 32a, 42a configured to act on the front surface 62a, 63a of a passive optical module 60, facing the abutment portion 32, 42, to restrain the passive optical module 60 along the longitudinally direction X-X. The cooperation of the abutment portions 32, 42 of a first retaining member 30 with the opposite second retaining member 40 therefore restrain longitudinally the passive optical module 60 in the receiving area 50.

The retaining portion 33, 43 defines a retaining surface 33a, 43a configured to act on the upper surface 62b, 63b of the passive optical module 60 at the two opposite end portions 62, 63 to retain the passive optical module 60 along a direction transverse to the base surface 20, for example opposite to the insertion direction C.

In particular, the abutment portion 32, 42 comprises an arm projecting from the base surface 20 and the retaining portion 33, 43 comprises a tooth projecting from the arm 32, 42 towards the tooth of the retaining portion of the opposite retaining member.

Each tooth has a retaining surface facing and engaging the upper surface of the passive optical module 60. Preferably, this retaining surface is parallel to the base surface 20.

According to the embodiment, where one of the first and second retaining members 30, 40 comprises an elastic portion 31, the arm 32 represents the elastic portion of the first retaining member 30 while the arm 42 is a substantially a fixed arm. In this embodiment, the teeth 33 of the elastic arm 32 protrude from the elastic arm 32 along the longitudinal direction X-X for a distance lower than the distance for which the teeth 43 of the arm 42 of the opposite second retaining member 40 protrudes. This allows the passive optical module 60 to be inserted firstly below the tooth 43 of the arm 42 and then to be pressed against the tooth 33 of the elastic arm 32 to snap below the tooth 33.

In the embodiment where both retaining members 30, 40 comprise the respective elastic portion 31, 41, the passive optical module 60 may be coupled with the first and second retaining members 30, 40 by pressing down the passive optical module 60 towards the base surface 20 at both end portions 62, 63.

As stated above, the second retaining members 40 may be identified by one single second retaining member. In this embodiment, the retaining member 40 is identified by a wall projecting from the base surface 20 and defining an abutment surface configured to act on the front surface 63a of a passive optical module 60.

## Claims

1. A device (10) for retaining passive optical modules (60), said device (10) comprising:
- a base surface (20),
- a first retaining member (30) and a second retaining member (40) arranged on said base surface (20) for each passive optical module (60),
- a receiving area (50) defined between said first retaining member (30) and said second retaining member (40) for receiving a plurality of passive optical modules (60),
wherein: the passive optical module comprises a body extending along the longitudinal direction from two opposite end portions, each end portion of the body having a respective front surface and an upper surface, and wherein
- said first retaining member (30) is spaced apart from the second retaining member (40) along a longitudinal direction (X-X),
- said receiving area (50) is configured to receive at least two passive optical modules (60) arranged mutually adjacent along a direction transverse to said longitudinal direction (X-X),
- said first retaining member (30) is configured to cooperate with said second retaining member (40) to retain a plurality of passive optical modules (60) arranged therebetween along said longitudinal direction (X-X),
**characterised in that**
- said first retaining member (30) is configured to act on the front surface (62a) and on the upper surface (62b) of an end portion (62) of at least one passive optical module (60) so that the side-walls of adjacent passive optical modules are free to enter into contact.

2. The device (10) according to claim 1, wherein said first retaining member (30) is configured to act on a side edge of an upper surface (62b) of an end portion (62) of said at least one passive optical module (60).

3. The device (10) according to anyone of claims 1 or 2, wherein said first retaining member (30) is configured to act on a corner of an upper surface (62b) of an end portion (62) of said at least one passive optical module (60).

4. The device (10) according to any of claims 1 to 3, wherein said first retaining member (30) is configured to act on two adjacent passive optical modules (60) to retain said two adjacent passive optical modules (60).

5. The device (10) according to claim 4, wherein said first retaining member (30) is configured to act on side edges of the respective upper surfaces of two adjacent passive optical modules (60) to retain said two adjacent passive optical modules (60) such that the central portions of said upper surfaces are disengaged from said each first retaining member (30).

6. The device (10) according to any of claims 1 to 5, wherein:
- said second retaining member (40) comprises a plurality of second retaining members (40),
- said second retaining members (40) are arranged mutually adjacent along a direction transverse to said longitudinal direction (X-X),
- said first retaining member (30) is spaced apart from an opposite second retaining member (40) along said longitudinal direction (X-X),
- said first retaining member (30) is configured to cooperate with the opposite second retaining member (40) to retain at least one respective passive optical module (60) arranged therebetween along said longitudinal direction (X-X),
- said second retaining member (40) is configured to act on at least one passive optical module (60) on an upper surface (63b) of an end portion (63) of said at least one passive optical module (60) and on a front surface (63a) of said at least one passive optical module (60).

7. The device (10) according to claims 1 to 6, comprising:
- a plurality of first retaining members (30) spaced apart along a first direction (A-A), and
- a plurality of second retaining members (40) spaced apart along a second direction (B-B) such that a free room is defined between two adjacent first and second retaining members (30,40), wherein:
- said first retaining members (30) and second retaining members (40) are arranged respectively at a first portion (23) and a second portion (22) of said base surface (20),
- each retaining member (30,40) of said first retaining members (30) and second retaining members (40) is configured to act on two adjacent passive optical modules (60) to retain said two adjacent passive optical modules (60) so that each passive optical module (60) of said two adjacent passive optical modules is retained by two adjacent retaining members (30,40) of said first retaining members (30) and second retaining members (40), respectively at said first portion (23) and said second portion (22) of the base surface (20).

8. The device (10) according to any of claims 1 to 7, wherein each retaining member (30,40) comprises an elastic portion (31,41) configured to act on an upper surface (62b,63b) of an end portion (62,63) of said at least one passive optical module (60).

9. The device (10) according to claim 8, wherein said elastic portion (31) is configured to elastically deform along said longitudinal direction (X-X) upon insertion of a passive optical module (60) in said receiving area (50) along an insertion direction transversal to said base surface (20).

10. The device (10) according to claim 8 or 9, wherein said elastic portion (31) is configured to snap over the passive optical module (60) when the passive optical module (60) is received in said receiving area (50).

11. The device (10) according to any of claims 1 to 10, wherein:
- each retaining member (30,40) comprises an abutment portion (32, 42) and a retaining portion (33, 43),
- said abutment portion (32, 42) defines an abutment surface (32a, 42a) configured to act on a front surface (62a, 63a) of said at least one passive optical module (60), facing said abutment surface (32a, 42a), to restrain said at least one passive optical module (60) along said longitudinally direction (X-X),
- said retaining portion (33, 43) defines a retaining surface (33a, 43a) configured to act on an upper surface (62b, 63b) of an end portion (62, 63) of said at least one passive optical module (60), opposite to said base surface (20), to retain said at least one passive optical module (60) along a direction transverse to said base surface (20).

12. The device (10) according to claim 11, wherein:
- said abutment portion (32, 42) comprises an arm projecting from said base surface (20),
- said retaining portion (33, 43) comprises a tooth projecting from said arm (32, 42) towards the tooth of the retaining portion of the opposite retaining member.

13. A tray (1) for passive optical modules, said tray (1) comprising a device (10) according to any of claims 1 to 12.

14. An assembly (100) comprising a device (10) for retaining passive optical modules (60) according to any of claims 1 to 12, and a plurality of passive optical modules (60) associated with said device (10),
wherein:
- each passive optical module (60) extends along said longitudinal direction (X-X),
- said passive optical modules (60) are arranged mutually adjacent in said receiving area (50) along a direction transversal to said longitudinal direction (X-X).

15. The assembly (100) according to claim 14, wherein:
- each passive optical module (60) comprises a body (61) extending along said longitudinal direction (X-X) from two opposite end portions (62, 63), each end portion of said body (61) having a respective front surface (62a, 63a) and an upper surface (62b, 63b),
- said first retaining member (30) acts on said at least one passive optical module (60) at a respective end portion (62) on said front surface (62a) and on said upper surface (62b).

16. The assembly (100) according to claim 14 or 15, wherein:
- said body (61) has a lateral surface (64) extending longitudinally between the opposite front surfaces (62a, 63a),
- said front surfaces (62a, 63a) face said first retaining member (30) and said second retaining member (40),
- the lateral surface (64) of a passive optical module (60) comprises two opposite side portions (64b, 64d) facing a respective side portion (64d, 64b) of the lateral surface of an adjacent passive optical module (60).

17. The assembly (100) according to claim 16, wherein said first retaining member (30) and said second retaining member (40) are disengaged from said facing side portions (64b, 64d) of adjacent passive optical modules (60).

## Patentansprüche

1. Vorrichtung (10) zur Befestigung von passiven optischen Modulen (60), wobei die Vorrichtung (10) umfasst:
- eine Grundfläche (20),
- ein erstes Halteelement (30) und ein zweites Halteelement (40), die auf der Grundfläche (20) für jedes passive optische Modul (60) angeordnet sind,
- einen Aufnahmebereich (50), der zwischen dem ersten Halteelement (30) und dem zweiten Halteelement (40) definiert ist, um eine Vielzahl von passiven optischen Modulen (60) aufzunehmen, wobei:
das passive optische Modul einen Körper umfasst, der sich entlang der Längsrichtung von zwei gegenüberliegenden Endabschnitten erstreckt, wobei jeder Endabschnitt des Körpers eine jeweilige vordere Fläche und eine obere Fläche aufweist, und wobei
- das erste Halteelement (30) das zweite Halteelement (40) entlang der Längsrichtung (X-X) beabstandet,
- der Aufnahmebereich (50) dazu konfiguriert ist, mindestens zwei optische Module (60) aufzunehmen, die abwechselnd entlang einer Richtung transversal zu Längsrichtung (X-X) angeordnet sind,
- das erste Halteelement (30) dazu konfiguriert ist, mit dem zweiten Halteelement (40) zusammenzuwirken, um eine Vielzahl von passiven optischen Modulen (60) zu befestigen, die dazwischen entlang der Längsrichtung (X-X) angeordnet sind, **dadurch gekennzeichnet, dass**
- das erste Halteelement (30) dazu konfiguriert ist, auf die vordere Fläche (62a) und auf die obere Fläche (62b) eines Endabschnitts (62) von mindestens einem passiven optischen Modul (60) zu wirken, so dass die Seitenwände von benachbarten passiven optischen Modulen dafür frei sind, miteinander in Kontakt zu gelangen.

2. Vorrichtung (10) nach Anspruch 1, wobei das erste Halteelement (30) dazu konfiguriert ist, auf eine Seitenkante einer oberen Fläche (62b) eines Endabschnitts (62) des mindestens einen passiven optischen Moduls (60) zu wirken.

3. Vorrichtung (10) nach einem der Ansprüche 1 oder 2, wobei das erste Halteelement (30) dazu konfiguriert ist, auf eine Ecke einer oberen Fläche (62b) eines Endabschnitts (62) des mindestens einen passiven optischen Moduls (60) zu wirken.

4. Vorrichtung (10) nach einem der Ansprüche 1 bis 3, wobei das erste Halteelement (30) dazu konfiguriert ist, auf zwei benachbarte passive optische Module (60) zu wirken, um die zwei benachbarten passiven optischen Module (60) zu befestigen.

5. Vorrichtung (10) nach Anspruch 4, wobei das erste Halteelement (30) dazu konfiguriert ist, auf Seitenkanten der jeweiligen oberen Flächen von zwei benachbarten passiven optischen Modulen (60) zu wirken, um die zwei benachbarten passiven optischen Module (60) so zu halten, dass die zentralen Abschnitte der oberen Flächen von dem jeweiligen ersten Halteelement (30) ausgerückt werden.

6. Vorrichtung (10) nach einem der Ansprüche 1 bis 5, wobei:
- das zweite Halteelement (40) eine Vielzahl von zweiten Halteelementen (40) umfasst,
- die zweiten Halteelemente (40) abwechselnd nebeneinander entlang einer Richtung transversal zu der Längsrichtung (X-X) angeordnet sind,
- das erste Halteelement (30) von einem gegenüberliegenden zweiten Halteelement (40) entlang der Längsrichtung (X-X) beabstandet ist,
- das erste Halteelement (30) dazu konfiguriert ist, mit dem gegenüberliegenden zweiten Halteelement (40) zusammenzuwirken, um mindestens ein jeweiliges passives optisches Modul (60) zu befestigen, das dazwischen entlang der Längsrichtung (X-X) angeordnet ist,
- wobei das zweite Halteelement (40) dazu konfiguriert ist, auf mindestens ein passives optisches Modul (60) auf einer oberen Fläche (63b) eines Endabschnitts (63) des mindestens einen passiven optischen Moduls (60) an einer vorderen Fläche (63a) des mindestens einen passiven optischen Moduls (60) zu wirken.

7. Vorrichtung (10) nach den Ansprüchen 1 bis 6, umfassend:
- eine Vielzahl von ersten Halteelementen (30), die einander entlang einer ersten Richtung (A-A) beabstanden, und
- eine Vielzahl von zweiten Halteelementen (40), die einander entlang einer zweiten Richtung (B-B) beabstanden, so dass ein Freiraum zwischen zwei benachbarten ersten und zweiten Halteelementen (30, 40) definiert ist, wobei:
- die ersten Halteelemente (30) und die zweiten Halteelemente (40) jeweils an einem ersten Abschnitt (23) und einem zweiten Abschnitt (22) der Grundfläche (20) angeordnet sind,
- jedes Halteelement (30, 40) der ersten Halteelemente (30) und der zweiten Halteelemente (40) dazu konfiguriert ist, auf zwei benachbarte passive optische Module (60) zu wirken, um die zwei benachbarten passiven optischen Module (60) zu befestigen, so dass jedes passive optische Modul (60) der zwei benachbarten passiven optischen Module durch zwei benachbarte Halteelemente der ersten Halteelemente (30) und der zweiten Halteelemente (40) an dem ersten Abschnitt (23) bzw. dem zweiten Abschnitt (22) der Grundfläche (20) befestigt wird.

8. Vorrichtung (10) nach einem der Ansprüche 1 bis 7, wobei jedes Halteelement (30, 40) einen elastischen Abschnitt (31, 41) umfasst, der dazu konfiguriert ist, auf eine obere Fläche (62b, 63b) eines Endabschnitts (62, 63) des mindestens einen passiven optischen Moduls (60) zu wirken.

9. Vorrichtung (10) nach Anspruch 8, wobei der elastische Abschnitt (31) dazu konfiguriert ist, sich elastisch entlang der Längsachse (X-X) beim Einsetzen eines passiven optischen Moduls (60) in den Aufnahmebereich (50) entlang einer Einsetzrichtung zu verformen, die transversal zu der Grundfläche (20) verläuft.

10. Vorrichtung (10) nach Anspruch 8 oder 9, wobei der elastische Abschnitt (31) dazu konfiguriert ist, über dem passiven optischen Modul (60) einzuschnappen, wenn das passive optische Modul in dem Aufnahmebereich (50) aufgenommen wird.

11. Vorrichtung (10) nach einem der Ansprüche 1 bis 10, wobei:
- jedes Halteelement (30, 40) einen Anlageabschnitt (32, 42) und einen Halteabschnitt (33, 43) umfasst,
- der Anlageabschnitt (32, 42) eine Anlagefläche (32a, 42a) definiert, die dazu konfiguriert ist, auf eine vordere Fläche (62a, 63a) des mindestens einen passiven optischen Moduls (60) zu wirken, die zu einer Anlagefläche (32a, 42a) ausgerichtet ist, um das mindestens eine passive optische Modul (60) entlang der Längsrichtung (X-X) zu befestigen,
- der Halteabschnitt (33, 43) eine Haltefläche (33a, 43a) definiert, die dazu konfiguriert ist, auf eine obere Fläche (62a, 63a) eines Endabschnitts (62, 63) des mindestens einen passiven optischen Moduls (60) zu wirken, die der Grundfläche (20) gegenüber liegt, um das mindestens eine passive optische Modul (60) entlang einer Richtung transversal zu der Grundfläche (20) zu befestigen.

12. Vorrichtung (10) nach Anspruch 11, wobei:
- der Anlageabschnitt (32, 42) einen Arm umfasst, der von der Grundfläche (20) vorsteht,
- der Halteabschnitt (33, 43) einen Zahn umfasst, der von dem Arm (32, 42) in Richtung des Zahns des Halteabschnitts des gegenüberliegenden Halteelements vorsteht.

13. Ablage (1) für passive optische Module, wobei die Ablage (1) eine Vorrichtung (10) nach einem der Ansprüche 1 bis 12 umfasst.

14. Anordnung (100), umfassend eine Vorrichtung (10) zum Befestigen von passiven optischen Modulen (60) nach einem der Ansprüche 1 bis 12, und eine Vielzahl von passiven optischen Modulen (60), die der Vorrichtung (10) zugehörig sind, wobei:
- sich jedes passive optische Modul (60) entlang der Längsrichtung (X-X) erstreckt,
- die passiven optischen Module (60) abwechselnd nebeneinander in dem Aufnahmebereich (50) entlang einer Richtung transversal zu der Längsrichtung (X-X) angeordnet sind.

15. Anordnung (100) nach Anspruch 14, wobei:
- jedes passive optische Modul (60) einen Körper (61) umfasst, der sich entlang der Längsrichtung (X-X) von zwei gegenüberliegenden Endabschnitten (62, 63) erstreckt, wobei jeder Endabschnitt des Körpers (61) eine jeweilige vordere Fläche (62a, 63a) und eine obere Fläche (62b, 63b) aufweist,
- das erste Halteelement (30) auf das mindestens eine passive optische Modul (60) an einem jeweiligen Endabschnitt (62) auf der vorderen Fläche (62a) und auf der oberen Fläche (62b) wirkt.

16. Anordnung (100) nach Anspruch 14 oder 15, wobei:
- der Körper (61) eine laterale Fläche (64) aufweist, die sich längs zwischen den gegenüberliegenden vorderen Flächen (62a, 63a) erstreckt,
- die vorderen Flächen (62a, 63a) zu dem ersten Halteelement (30) und dem zweiten Halteelement (40) ausgerichtet sind,
- die laterale Fläche (64) eines passiven optischen Moduls (60) zwei gegenüberliegende Seitenabschnitte (64b, 64d) umfasst, die zu einem jeweiligen Seitenabschnitt (64b, 64b) der lateralen Fläche eines benachbarten passiven optischen Moduls (60) ausgerichtet sind.

17. Anordnung (100) nach Anspruch 16, wobei das erste Halteelement (30) und das zweite Halteelement (40) von den zueinander ausgerichteten Seitenabschnitten (64b, 64b) von benachbarten passiven optischen Modulen (60) ausgerückt sind.

## Revendications

1. Dispositif (10) pour retenir des modules optiques passifs (60), ledit dispositif (10) comprenant :
- une surface de base (20),
- un premier élément de retenue (30) et un second élément de retenue (40) agencés sur ladite surface de base (20) pour chaque module optique passif (60),
- une zone de réception (50) définie entre ledit premier élément de retenue (30) et ledit second élément de retenue (40) pour recevoir une pluralité de modules optiques passifs (60), dans lequel :
- le module optique passif comprend un corps qui s'étend le long de la direction longitudinale à partir de deux portions d'extrémité opposées, chaque portion d'extrémité du corps ayant une surface avant et une surface supérieure respective, et dans lequel
- ledit premier élément de retenue (30) est espacé par rapport au second élément de retenue (40) le long d'une direction longitudinale (X-X),
- ladite zone de réception (50) est configurée pour recevoir au moins deux modules optiques passifs (60) agencés de façon mutuellement adjacente le long d'une direction transversale par rapport à ladite direction longitudinale (X-X),
- ledit premier élément de retenue (30) est configuré pour coopérer avec ledit second élément de retenue (40) afin de retenir une pluralité de modules optiques passifs (60) agencée entre ceux-ci le long de ladite direction longitudinale (X-X),
**caractérisé en ce que**
- ledit premier élément de retenue (30) est configuré pour agir sur la surface avant (62a) et sur la surface supérieure (62b) d'une portion d'extrémité (62) d'au moins un module optique passif (60) de sorte que les parois latérales de modules optiques passifs adjacents sont libres d'entrer en contact.

2. Dispositif (10) selon la revendication 1, dans lequel ledit premier élément de retenue (30) est configuré pour agir sur un bord latéral d'une surface supérieure (62b) d'une portion d'extrémité (62) dudit au moins un module optique passif (60).

3. Dispositif (10) selon les revendications 1 ou 2, dans lequel ledit premier élément de retenue (30) est configuré pour agir sur un coin d'une surface supérieure (62b) d'une portion d'extrémité (62) dudit au moins un module optique passif (60).

4. Dispositif (10) selon l'une quelconque des revendications 1 à 3, dans lequel ledit premier élément de retenue (30) est configuré pour agir sur deux modules optiques passifs adjacents (60) afin de retenir lesdits deux modules optiques passifs adjacents (60).

5. Dispositif (10) selon la revendication 4, dans lequel ledit premier élément de retenue (30) est configuré pour agir sur des bords latéraux des surfaces supérieures respectives de deux modules optiques passifs adjacents (60) afin de retenir lesdits deux modules optiques passifs adjacents (60) de sorte que les portions centrales desdites surfaces supérieures sont désengagées par rapport audit chaque premier élément de retenue (30).

6. Dispositif (10) selon l'une quelconque des revendications 1 à 5, dans lequel :
- ledit second élément de retenue (40) comprend une pluralité de seconds éléments de retenue (40),
- lesdits seconds éléments de retenue (40) sont agencés de façon mutuellement adjacente le long d'une direction transversale par rapport à ladite direction longitudinale (X-X),
- ledit premier élément de retenue (30) est espacé par rapport à un second élément de retenue (40) opposé, le long de ladite direction longitudinale (X-X),
- ledit premier élément de retenue (30) est configuré pour coopérer avec le second élément de retenue (40) opposé afin de retenir au moins un module optique passif (60) respectif agencé entre ceux-ci le long de ladite direction longitudinale (X-X),
- ledit second élément de retenue (40) est configuré pour agir sur au moins un module optique passif (60) sur une surface supérieure (63b) d'une portion d'extrémité (63) dudit au moins un module optique passif (60) et sur une surface avant (63a) dudit au moins un module optique passif (60).

7. Dispositif (10) selon les revendications 1 à 6, comprenant :
- une pluralité de premiers éléments de retenue (30) espacés entre eux le long d'une première direction (A-A), et
- une pluralité de seconds éléments de retenue (40) espacés entre eux le long d'une seconde direction (B-B) de sorte qu'un espace libre est défini entre deux premier et second éléments de retenue adjacents (30, 40), dans lequel :
- lesdits premiers éléments de retenue (30) et seconds éléments de retenue (40) sont agencés respectivement au niveau d'une première portion (23) et d'une seconde portion (22) de ladite surface de base (20),
- chaque élément de retenue (30, 40) desdits premiers éléments de retenue (30) et seconds éléments de retenue (40) est configuré pour agir sur deux modules optiques passifs adjacents (60) afin de retenir lesdits deux modules optiques passifs adjacents (60) de sorte que chaque module optique passif (60) desdits deux modules optiques passifs adjacents est retenu par deux éléments de retenue adjacents (30, 40) desdits premiers éléments de retenue (30) et seconds éléments de retenue (40), respectivement, au niveau de ladite première portion (23) et de ladite seconde portion (22) de la surface de base (20).

8. Dispositif (10) selon l'une quelconque des revendications 1 à 7, dans lequel chaque élément de retenue (30, 40) comprend une portion élastique (31, 41) configurée pour agir sur une surface supérieure (62b, 63b) d'une portion d'extrémité (62, 63) dudit au moins un module optique passif (60).

9. Dispositif (10) selon la revendication 8, dans lequel ladite portion élastique (31) est configurée pour se déformer de manière élastique le long de ladite direction longitudinale (X-X) lors de l'insertion d'un module optique passif (60) dans ladite zone de réception (50) le long d'une direction d'insertion transversale par rapport à ladite surface de base (20).

10. Dispositif (10) selon la revendication 8 ou 9, dans lequel ladite portion élastique (31) est configurée pour s'enclencher sur le module optique passif (60) lorsque le module optique passif (60) est reçu dans ladite zone de réception (50).

11. Dispositif (10) selon l'une quelconque des revendications 1 à 10, dans lequel :
- chaque élément de retenue (30, 40) comprend une portion de butée (32, 42) et une portion de retenue (33, 43),
- ladite portion de butée (32, 42) définit une surface de butée (32a, 42a) configurée pour agir sur une surface avant (62a, 63a) dudit au moins un module optique passif (60), qui fait face à ladite surface de butée (32a, 42a), afin de restreindre ledit au moins un module optique passif (60) le long de ladite direction longitudinale (X-X),
- ladite portion de retenue (33, 43) définit une surface de retenue (33a, 43a) configurée pour agir sur une surface supérieure (62b, 63b) d'une portion d'extrémité (62, 63) dudit au moins un module optique passif (60), opposée à ladite surface de base (20), afin de retenir ledit au moins un module optique passif (60) le long d'une direction transversale par rapport à ladite surface de base (20).

12. Dispositif (10) selon la revendication 11, dans lequel :
- ladite portion de butée (32, 42) comprend un bras se projetant à partir de ladite surface de base (20),
- ladite portion de retenue (33, 43) comprend une dent se projetant à partir dudit bras (32, 42) vers la dent de la portion de retenue de l'élément de retenue opposé.

13. Plateau (1) pour des modules optiques passifs, ledit plateau (1) comprenant un dispositif (10) selon l'une quelconque des revendications 1 à 12.

14. Ensemble (100) comprenant un dispositif (10) pour retenir des modules optiques passifs (60) selon l'une quelconque des revendications 1 à 12, et une pluralité de modules optiques passifs (60) associée audit dispositif (10),
dans lequel :
- chaque module optique passif (60) s'étend le long de ladite direction longitudinale (X-X),
- lesdits modules optiques passifs (60) sont agencés de façon mutuellement adjacente dans ladite zone de réception (50) le long d'une direction transversale par rapport à ladite direction longitudinale (X-X).

15. Ensemble (100) selon la revendication 14, dans lequel :
- chaque module optique passif (60) comprend un corps (61) qui s'étend le long de ladite direction longitudinale (X-X) à partir de deux portions d'extrémité opposées (62, 63), chaque portion d'extrémité dudit corps (61) ayant une surface avant respective (62a, 63a) et une surface supérieure (62b, 63b),
- ledit premier élément de retenue (30) agit sur ledit au moins un module optique passif (60) au niveau d'une portion d'extrémité respective (62) sur ladite surface avant (62a) et sur ladite surface supérieure (62b).

16. Ensemble (100) selon la revendication 14 ou 15, dans lequel :
- ledit corps (61) a une surface latérale (64) qui s'étend de façon longitudinale entre les surfaces avant opposées (62a, 63a),
- lesdites surfaces avant (62a, 63a) font face audit premier élément de retenue (30) et ledit second élément de retenue (40),
- la surface latérale (64) d'un module optique passif (60) comprend deux portions latérales opposées (64b, 64d) qui font face à une portion latérale respective (64d, 64b) de la surface latérale d'un module optique passif adjacent (60).

17. Ensemble (100) selon la revendication 16, dans lequel ledit premier élément de retenue (30) et ledit second élément de retenue (40) sont désengagés par rapport auxdites portions latérales se faisant face (64b, 64d) de modules optiques passifs adjacents (60).
